# EUROPEAN PATENT SPECIFICATION

(11) **EP 0 641 686 B1**
(45) Date of publication and mention of the grant of the patent: **02.06.1999**
(21) Application number: 94306263.8
(22) Date of filing: 24.08.1994
(51) Int. Cl.: B60R 1/06

(54) **Mirror mechanisms**
Mechanismen für Spiegel
Mécanismes pour rétroviseurs

(30) Priority: 04.09.1993 GB 9318396
(43) Date of publication of application: 08.03.1995
(73) Proprietor: RAYDYOT LIMITED, Warley, West Midlands B64 6OB (GB)
(72) Inventor: Singh, Ram Robert, Sutton Coldfield, West Midlands B73 5SN (GB); Brookes, Geoffrey Stanley, Hereford & Worcester DY10 2RG (GB); Wyers, George James, Bilston, West Midlands WV14 9LF (GB); Owen, Roderick Leslie, Solihull, West Midlands B91 2RR (GB)
(74) Representative: Barnfather, Karl Jon, Dr.

(56) References cited:
- EP-A- 0 410 587
- DE-B- 1 480 106
- GB-A- 1 496 001
- US-A- 3 784 149
- US-A- 4 186 905
- US-A- 4 623 115

## Description

This invention relates primarily to mirror mechanisms for commercial vehicles.

The usual arrangement includes a D member having a pair of parallel portions extending outwardly from the vehicle cab and which are integral and unitary with a vertically extending portion spaced from the cab. The mirror head, that is the reflective element in its casing, is clamped to the vertical portion. When the vehicle negotiates a narrow passage the D member can be folded from its normal outward position to one close to the cab so as to reduce the total width. For this purpose the cab ends of the parallel portions are pivoted coaxially on mounting brackets attached to the cab. To enable the D member to be returned to the precise position formerly occupied, and furthermore to resist movement out of that normal position under wind pressure, a so-called clutch mechanism is employed in (usually) one only of the brackets. The D member portion which is so pivoted is herein called "the arm" when a predetermined force ("the break out force") is applied, sufficient to overcome springloading. This causes an axial separation of the parts for example as a dogtooth on one part moves out of a recess on the other part. This is accommodated by flexing of the arm. The resilience of the arm assists in re-engagement, and represents part of the total springloading which normally holds the tooth in the recess and hence fixes the angular position of the respective parts.

It is also to be mentioned that in some cases the D member may consist only of the arm, that is the second parallel portion and even the vertical portion may be eliminated. In this case the arm does not contribute to the springloading, but essentially the same clutch mechanism is employed.

US-A-4 186 905 shows the arm connectable to the bracket via an intermediate member which is axially movable relative to the bracket but angularly fast therewith by means of teeth and recesses, and also having teeth as recesses operable between the intermediate member and the arm.

The main problem now is that cab widths are increasing, and in order to avoid undue increase in total vehicle width, shorter arms are employed. In the extreme case, the arm forms the vertical portion only without any transversely extending portion. In either case or where extended axial movement cannot be permitted - that is a shorter transverse portion or none at all, the possibility of relying on flexibility of the arm is reduced or lost.

The object of the invention is to provide a clutch mechanism which avoids the need for axial separation of the arm and bracket to which it is pivoted. This objective is attained by providing a mirror mechanism of the tyre disclosed in US-A-4 186 905 and having the features referred to in claim 1.

Release for angular movement of the arm is effected when the applied load (break out force) overcomes the spring to allow the intermediate member to move to a disengaged position.

In one example of the invention, the intermediate member may have equispaced radial teeth extending along its length and engaged in longitudinally extending recesses in the bracket, so that the intermediate member can move axially but remain in angular engagement with the bracket. The end face of the intermediate member may then have radial recesses engageable with teeth on the arm when the intermediate member is in the appropriate axial position to which it is normally spring urged. However, the positions of the teeth and recesses may be interchanged throughout.

Mirror movement, when in the normal position for use, is most undesirable. Play, backlash or room for vibration is to be avoided. According to an important embodiment of the invention all of the teeth and recesses are tapered or of wedge shape and the parts are arranged so that the spring, preferably one and the same spring, urges engagement in both axial and radial direction so as to lock the intermediate member in both directions, that is to the bracket and to the arm. When the intermediate member comprises a ring of separate segments they are assembled to provide a frusto-conical bore, and the spring may act via a follower of complementary shape so as to urge the segments radially and axially. The radial movement is to drive the intermediate member clutch element or elements into firmer engagement with the complementary part on the bracket, whereas the axial movement effects a like operation between the clutch elements of the intermediate member and the arm.

Each tooth may be split into separate parts which are spring urged apart so as to achieve better engagement. Alternatively, the tooth shape may be such as to enable it to be driven a variable distance - thus allowing for wear - and achieve mating.

One embodiment of the invention and various alternatives will now be more particularly described with reference to the accompanying drawing wherein:-
Figure 1 is an exploded somewhat diagrammatic view of a typical arrangement;
Figure 2 is a fragmentary and diagrammatic sectional elevation of an assembly similar but not identical to Figure 1;
Figure 3 is a fragmentary perspective view of a modification;
Figure 4 shows a detail of a modification to Figure 3;
Figures 5 and 6 show two alternative possibilities in perspective view;
Figure 7 is another variation;
Figures 8-11 are four possible arrangements in diagrammatic plan view;
Figure 12 is a section on the line Xll - Xll of Figure 11;
Figure 13 is a view similar to Figure 2 of another embodiment; and
Figure 14 is an exploded perspective view of two components according to yet another possibility.

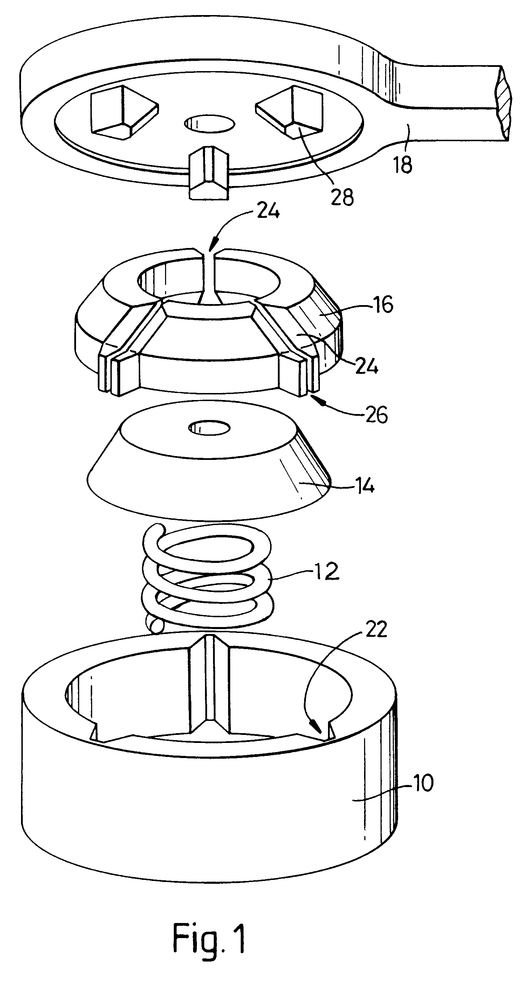

Referring now to Figure 1, the arrangement comprises a bracket 10, a spring 12, a spring follower 14, an intermediate member 16 and arm 18. It is to be understood that the illustrated components 10 and 18 may form the actual bracket and arm themselves or may be components of the clutch mechanism for assembly into and onto the bracket and arm as the case may be.

The bracket 10 has a generally cylindrical bore provided with equispaced axially extending tooth recesses 22.

The spring 12 is a helical compression spring.

The spring follower 14 is generally frusto-conical.

The intermediate member in this embodiment comprises three separate segments each extending over approximately 120 degrees of arc. The assembled ring is generally frusto-conical on its under side to receive the spring follower 14 therein, and is also generally frusto-conical on its upper side and is provided with equispaced shallow V-shaped recesses 24 on that upper side. The intermediate member also has, in this instance, three equispaced radial and axially extending teeth 26. As will be seen, each recess 24 and each tooth 26 are formed on the adjacent ends of two different segments of the intermediate member.

The arm 18 is provided with three teeth 28 on its under-side.

All of the illustrated parts are effectively apertured to receive a pivot pin which further assists in maintaining the assembly in axial relationship.

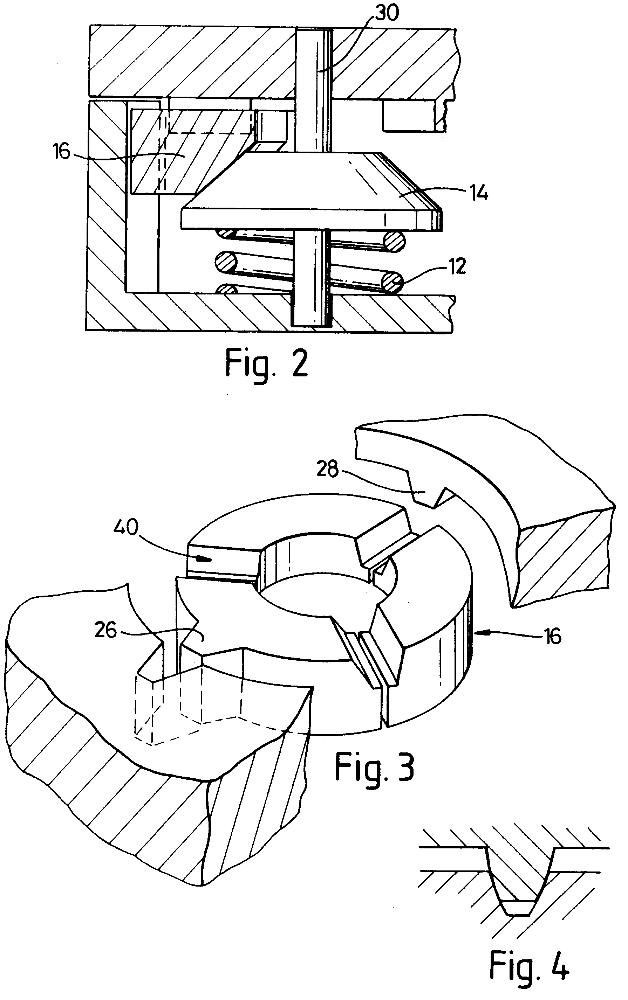

Figure 2 shows the parts in the engaged position. The pivot pin 30 is shown only diagrammatically, and the means by which it holds the parts in axial assembly and maintains the spring in compression is not shown in the view. The engagement between the spring follower 14 and the intermediate member will be seen in the view, and it will be seen that the segments are forced radially outwardly by the spring and its follower as well as axially maintain the grooves 24 in engagement with the teeth 28.

The figure shows somewhat diagrammatically the arrangement of forces from the spring in a clutch similar to that shown in Figure 1, except that in this case the upper surface of the intermediate member 16 is normal to the axis of angular movement rather than being frusto-conical as shown in Figure 1.

Figure 3 is a fragmentary view showing a modification in which the recesses 40 for axial engagement with teeth 28 on the arm are provided between the adjacent ends of segments which make up the intermediate member 16, as in Figure 1, and extend across a planar face as in Figure 2, but in which, the radial teeth 26, only one of which is shown, are provided wholly on the segments instead of being in two halves, on two adjacent segments. In this case, resistance to movement may be provided by complementary shapes or solely by the radial movement resulting from the spring follower as in Figure 2. Figure 4 shows a possible arrangement for tooth shapes to ensure good fit in an arrangement of the Figure 3 kind in this respect.

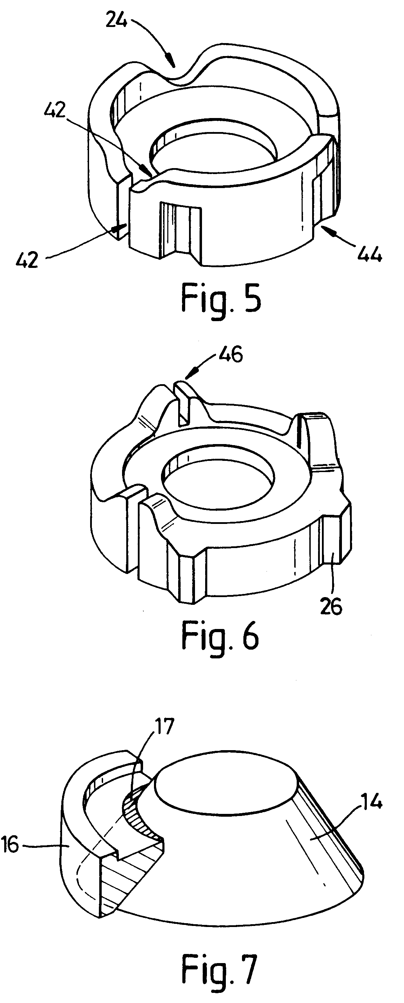

Figures 5 shows an intermediate member made as a single piece instead of segments, radially slit at 42 to allow a limited radial movement under the action of the spring follower. Figure 5 also shows a modification in that the member is provided with recesses 44 instead of teeth 26, and it will be appreciated that in this case the corresponding bracket part will be toothed. It also shows recesses 24 formed in a peripheral flange.

Figure 6 shows a variation on the Figure 5 arrangement again employing teeth 26 instead of recesses 44, but in this case having teeth 46 provided instead of recesses 24, and it will be appreciated that in this event the arm is to be provided with the recesses as the clutch elements.

It will also be understood that whilst Figures 1 to 6 illustrate, in general, the provision of three equispaced teeth and recesses for each of the clutch elements, any number can be provided. In general, when the arm turns after clutch release, it will normally turn through a maximum distance from one recess to the next, and hence the provision of four recesses or teeth at each point may allow for a 90 deg. turn, and so on.

Figure 7 shows a modification in which the spring follower 14 is made of a different curvature to the adjacent face of the intermediate member 16 with the gap 17 cross-latched. This variant is, for practical reasons, only available when the segments are provided instead of making the intermediate member as a single unitary piece. The mismatch of curves distributes the spring load over smaller surface areas which may be advantageous in the event of wear occurring.

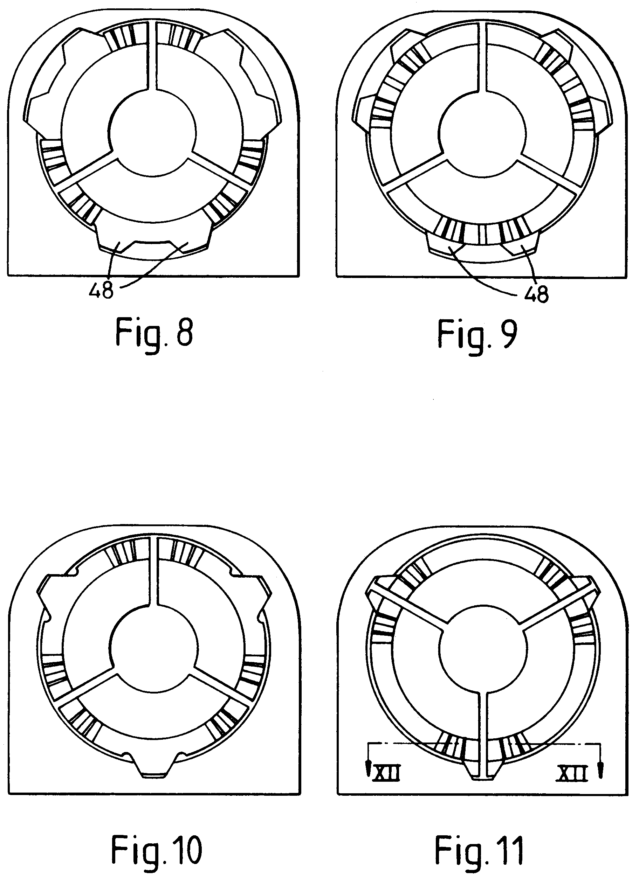

Figures 8-11 are fragmentary plan views, taken in section, illustrating different numbers of teeth and recesses and different arrangements of these with respect to segments. The arrangement shown in Figure 11 uses single teeth for the constantly meshed clutch part, as compared to the double teeth 48 in Figures 8 and 9, having those teeth split as in Figure 1, and having the clutch teeth which are axially separated when break out occurs likewise split again as in Figure 1.

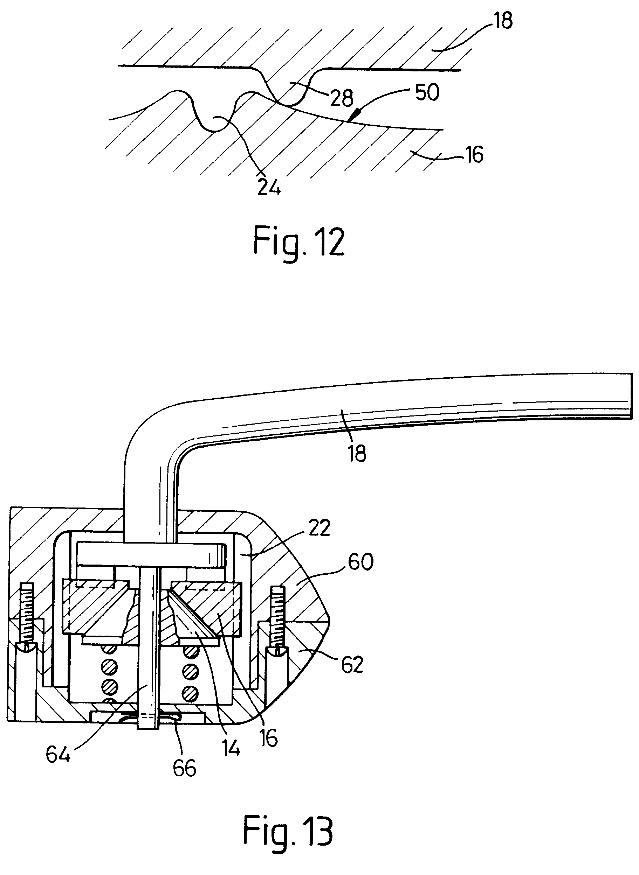

Figure 12 is a fragmentary sectional elevation taken along the line Xll - Xll of Figure 11 showing the tooth 28 on the arm 18 disengage from the recess 24 on the intermediate member 16, and illustrating the use of a cam slope 50 so as to encourage continued movement after disengagement in the direction which takes the tooth 28 towards the next recess.

Figure 13 shows an embodiment of the invention where the arm comprises only the illustrated portion 18 as hereinbefore discussed. It will be noted that the bracket comprises a pair of parts 60 62 with an interior construction generally similar to that illustrated in Figure 1 including the axially extending recesses 22, the intermediate member 16, and spring follower 14. The spring is held in compression by the bracket part 62. Pivot pin 64 is integral with the arm 18, provides sliding guidance for the spring follower 14, is journalled in the body part 62, and a circlip, cotterpin or like 66 holds the arm in position.

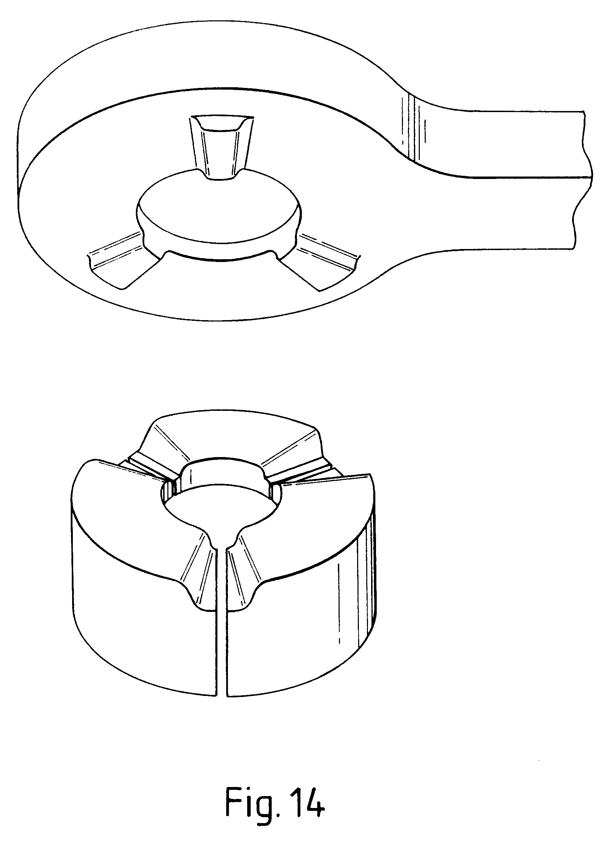

Figure 14 shows a variation in which the axially engaged teeth (only) are illustrated and in which the teeth are generally V-shaped in a plane normal to the axis of angular movement, so as to have a self-centering effect in engagement without relying upon the pivot pin.

It will be appreciated that the parts may be made of appropriate materials of metals, plastic or ceramic for example.

## Claims

1. A mirror mechanism comprising a bracket (10), an arm (18) pivoted to the bracket for angular movement, and a clutch mechanism (12,14,16) for normally holding the arm in a predetermined position relative to the bracket, in which the clutch mechanism comprises an intermediate member (16) which is axially movable relative to the bracket but is angularly fast relative to the bracket by the provision of radial teeth (26) on the intermediate member engageable in recesses (22) in the bracket or vice versa, said intermediate member also having teeth (24) cooperable with recesses (28) on the arm or vice versa so as to hold the arm angularly fast to the intermediate member, and spring means (12) for urging the intermediate member into engagement of the recesses, characterised in that said intermediate member is radially slit (26) or is a ring of segments so as to allow limited radial movement when the spring means act on the intermediate member.

2. A mirror as claimed in Claim 1 wherein a spring follower (14) of generally frusto-conical shape is located between the spring and the intermediate member.

3. A mirror as claimed in Claim 1 or Claim 2 wherein the teeth (28) and recesses (24) are tapered or of wedge shape.

4. A mirror as claimed in claim 1 wherein each tooth (26) comprises parts provided on separate segments of the intermediate member.

5. A mirror as claimed in claim 2 or claim 3 wherein the tooth shape relative to the recess shape allows the tooth to be driven for a variable distance so as to allow for wear.

## Patentansprüche

1. Ein Spiegelmechanismus, umfassend einen Träger oder Gehäuse (10), einen gegenüber dem Gehäuse (10) schwenkbaren Arm (18) und einem Kupplungsmechanismus (12, 14, 16) zur Halterung des Armes in einer vorbestimmten Position gegenüber dem Gehäuse, wobei der Kupplungsmechanismus ein Zwischenglied (16) umfasst, welches axial beweglich gegenüber dem Gehäuse oder Halter (10), aber undrehbar gegenüber dem Gehäuse ist, durch Anordnung radialer Zahne (26) an dem Zwischenglied, die in Ausnehmungen (22) an dem Gehäuse eingreifen oder umgekehrt, wobei das Zwischenglied ebenfalls Zahne (24) hat, die zusammenarbeiten mit Ausnehmungen (28) an dem Arm oder umgekehrt, der Art dass der Arm in der Winkelstellung festgehalten wird gegenüber dem Zwischenglied, und Federmittel (12), die das Zwischenglied in Eingriff mit den Ausnehmungen zu halten suchen, dadurch gekennzeichnet, dass das Zwischenglied radial gespalten oder aufgetrennt (Schlitze 26) ist oder aus einem Ring von Segmenten besteht, so dass begrenzte Radialbewegungen möglich sind, wenn die Federmittel gegen das Zwischenglied wirken.

2. Ein Spiegel gemäss Anspruch 1, wobei ein Federteller (14) von allgemein kegelstumpfförmiger Gestalt eingesetzt ist zwischen der Feder und dem Zwischenglied.

3. Ein Spiegel nach Anspruch 1 oder 2, wobei die Zahne (28) und Ausnehmungen (24) konisch oder keilförmig sind.

4. Ein Spiegel nach Anspruch 1, wobei jeder Zahn (26) Teile umfasst, die vorgesehen sind auf separaten Segmenten des Zwischengliedes.

5. Ein Spiegel nach Anspruch 2 oder 3, wobei die Gestalt des Zahnes gegenüber der Gestalt der Ausnehmung es dem Zahn erlaubt, längs einer variablen Distanz getrieben zu werden, zum Ausgleich von Verschleiss.

## Revendications

1. Mécanisme pour rétroviseur comprenant un support (10), un bras (18) articulé au support pour un déplacement angulaire, et un mécanisme d'embrayage (12, 14, 16) pour maintenir normalement le bras dans une position prédéterminée par rapport au support, dans lequel le mécanisme d'embrayage comprend un élément intermédiaire (16) qui est mobile axialement par rapport au support mais qui est fixé angulairement par rapport au support au moyen de dents radiales (26) prévues sur l'élément intermédiaire et pouvant s'engager dans des creux (22) du support ou vice-versa, le dit élément intermédiaire comportant aussi des dents (24) pouvant coopérer avec des creux (28) du bras ou vice-versa, de façon à maintenir le bras solidaire angulairement de l'élément intermédiaire, et un dispositif à ressort (12) pour contraindre l'élément intermédiaire à engager les creux, caractérisé en ce que le dit élément intermédiaire est fendu radialement (26) ou est constitué par un anneau segmenté pour permettre un déplacement radial limité lorsque le dispositif à ressort agit sur l'élément intermédiaire.

2. Miroir selon la revendication 1, dans lequel un plateau de ressort (14) est logé entre le ressort et l'élément intermédiaire.

3. Miroir selon la revendication 1 ou la revendication 2, dans lequel les dents (28) et les creux (24) sont effilés ou en forme de coin.

4. Miroir selon la revendication 1 dans lequel chaque dent (26) comprend des parties prévues sur des segments séparés de l'élément intermédiaire.

5. Miroir selon la revendication 2 ou la revendication 3, dans lequel la forme de la dent par rapport à la forme du creux permet à la dent d'être entraînée sur une distance variable de façon à absorber l'usure.
